# EUROPEAN PATENT APPLICATION

(11) **EP 2 708 640 A1**
(43) Date of publication of application: **19.03.2014**
(21) Application number: 11869531.1
(22) Date of filing: 26.08.2011
(51) Int. Cl.: D06M 11/61, D06M 11/70, D06M 11/45

(54) **MULTI-USE FUNCTIONAL COTTON, AND METHOD FOR MANUFACTURING SAME**

(30) Priority: 21.07.2011 KR 20110072474
(71) Applicant: Enexis Co., Ltd., Ulju-gun, Ulsan 689-881 (KR)
(72) Inventor: YUN, Gapho, Busan 612-010 (KR); YUN, Giho, Busan 611-088 (KR); SO, Kwang Hui, Daegu 704-911 (KR); SONG, Woonhak, Daegu 706-808 (KR)
(74) Representative: Towler, Philip Dean
(86) International application number: PCT/KR2011/006306
(87) International publication number: WO 2013/012122

(57) **Abstract**

A multi-use functional cotton, and, more particularly, a multi-use functional cotton including a composition for manufacturing a multi-use functional cotton, and to a method for manufacturing the same are provided. Here, the composition includes natural cotton, an ammonium aqueous solution, a first ammonium phosphate, boron, an anionic surfactant, a fluorine-based water repellent, and an acrylic phosphate-based coupling agent. The multi-use functional cotton can be useful in maintaining a thermal retention property, a thermal insulation property and cold resistance of the natural cotton as a functional chemical, which is harmless to the human body, is allowed to permeate into a hollow tissue (lumen) of the natural cotton, and improving elasticity, tensile strength and bursting strength since more closed cells are formed than natural cotton not treated with the functional chemical. Also, the multi-use functional cotton can be useful in preventing oxidation of the cotton and exhibiting fire (flame) retardancy, moisture resistance, and spinnability. In addition, the multi-use functional cotton has a low production cost and can exhibit environmentally-friendly characteristics, and a waste material used can be re-used later as a recycled material. Further, the multi-use functional cotton can be used in the field of industrial applications including use as a material in a fibrous structure such as a processed cloth, a nonwoven cloth, a mat, a synthetic fiber cotton, a mixed wastepaper cotton, a mixed recycled cotton, a mixed straw cotton, and a mixed carbonized (carbon) fiber cotton.

## Description

### BACKGROUND

### 1. Field of the Invention

The present invention relates to multi-use functional cotton, and more particularly, to multi-use functional cotton including a composition for manufacturing natural cotton and multi-use functional cotton, and a method for manufacturing the same.

### 2. Discussion of Related Art

Natural cotton has been widely used in living environments, and is composed of at least 90% fibrin, which is referred to as cellulose, a small amount of moisture, and a small amount of fats. Cotton serves as a thermal insulation material for preventing transfer of heat and a thermal retention material since it has many lumens, and is in a twisted state. That is, much space present within cotton contains air that prevents movement of heat. Since air has a more excellent insulation effect than any other thermal insulation material present on the earth, natural cotton is characteristic in that it exhibits excellent properties such as a thermal retention property, a thermal insulation property, an extremely low temperature property, and a sound absorbing property without causing formation of toxic ingredients and environmental pollution. However, natural cotton has problems in that it has poor fire (flame) retardancy and a high hygroscopic property, and fungi and bacteria grow easily on cotton. Also, natural cotton may be oxidized when exposed to the air. Also, cotton itself causes scattering of fine dust, and also shows low tensile strength and poor workability. As a result, cotton (cotton wool) has only been recognized as useful for bedclothes and clothes, and has struggled to find applications in various other fields.

Meanwhile, to make a cellulose-based fiber fire (flame) retardant, a method for preparing functional cotton, which includes immersing cotton in a fire (flame) retardant such as a halogen (i.e., bromine, chlorine, or the like), phosphorus, or boron, and drying the cotton, has been proposed. However, since a fiber has a coating formed on a surface thereof, the fiber has a problem in that it does not easily maintain fire (flame) retardancy and a thermal retention-insulation property at a high temperature. Among halogen compounds, a bromine compound has a problem in that it has a high risk of producing carcinogens such as dioxins.

Fire (flame) retardant fiber materials include glass fiber, asbestos, rock wool, glass wool, ceramic wool, and the like. However, asbestos has been banned from use due to its harmfulness to the human body, and use of glass fiber, glass wool, ceramic wool and the like is also decreasing. Also, fire (flame) retardant synthetic fiber materials include aramid fiber, Nomex, polyimide fiber, and the like. However, these fibers are decomposed at a temperature of approximately 400 to 500 °C, and thus their use is limited. Also, the fibers have problems in that they are very expensive, cause environmental pollution as petrochemical products, and are difficult to recycle.

### SUMMARY OF THE INVENTION

The present invention is directed to multi-use functional cotton having fire (flame) retardancy, a thermal insulation property and water repellency while maintaining excellent properties of natural cotton, such as a thermal retention property, an extremely low temperature property, a sound absorbing property, and environmentally friendly characteristics, since a composition for manufacturing multi-use functional cotton is allowed to permeate into the lumen of the natural cotton, and showing significantly improved tensile strength and bursting strength.

However, the objects of the present invention are not limited thereto, and other objects of the present invention which are not disclosed herein will become more apparent to those of ordinary skill in the art by describing in detail exemplary embodiments thereof.

According to an aspect of the present invention, there is provided a composition for manufacturing multi-use functional cotton, which includes an ammonium aqueous solution, monoammonium phosphate, boron, an anionic surfactant, a fluorine-based water repellent, and an acrylic phosphate-based coupling agent. According to one exemplary embodiment of the present invention, the monoammonium phosphate may be included at a content of 20 to 25 parts by weight, based on 100 parts by weight of the ammonium aqueous solution, the boron may be included at a content of 3 to 7 parts by weight, the anionic surfactant may be included at a content of 0.1 to 0.3 parts by weight, the fluorine-based water repellent may be included at a content of 1.5 to 3.2 parts by weight, and the acrylic phosphate-based coupling agent may be included at a content of 0.5 to 2.5 parts by weight. Also, the composition for manufacturing multi-use functional cotton may permeate into the natural cotton, and may be used to manufacture the multi-use functional cotton.

According to another aspect of the present invention, there is provided a method for preparing a composition for manufacturing multi-use functional cotton, which includes (1) preparing a dissolving solution by adding monoammonium phosphate to an ammonium aqueous solution, (2) adding boron to the dissolving solution, (3) cooling the dissolving solution, and (4) injecting an anionic surfactant, a fluorine-based water repellent, and an acrylic phosphate-based coupling agent into the cooled dissolving solution. According to one exemplary embodiment of the present invention, operation (1) may further include dissolving the monoammonium phosphate in the ammonium aqueous solution at a temperature of 50 to 70 °C for 2 to 3 minutes while stirring.

According to still another aspect of the present invention, there is provided multi-use functional cotton including natural cotton and the composition. According to one exemplary embodiment of the present invention, the natural cotton and the composition may be present at a weight ratio of 5:1 to 5:3. Also, the multi-use functional cotton may be used to prepare a processed cloth, a nonwoven cloth, a mat, a board, a valve, an elbow, a thermal retention-insulation material for pipes, or a filtering material, and may also be used to prepare a fire retardant material, a flame retardant material, a thermal retention-insulation material, a cold resistant material, a sound absorbing material, an extremely low temperature material for LNG gas, an extremely low temperature material for LPG gas, mixed carbonized fiber cotton, and mixed carbon fiber cotton.

According to yet another aspect of the present invention, there is provided a method for manufacturing multi-use functional cotton, which includes (1) preparing cotton by immersing natural cotton in the composition for manufacturing multi-use functional cotton, (2) dehydrating and drying the cotton, and (3) scutching the cotton. According to one exemplary embodiment of the present invention, operation (1) may be performed by immersing the natural cotton in the composition for 1 to 2 minutes, preferably by immersing the natural cotton in the composition so that the natural cotton and the composition are present at a weight ratio of 5:1 to 5:3. Also, operation (2) may include dehydrating the cotton using a mangle dehydrator, and drying the cotton using a dielectric-heat dryer. Preferably, operation (2) may include dehydrating the cotton using the mangle dehydrator until a moisture content reaches 70 to 80%, and drying the dehydrated cotton using the dielectric-heat dryer until the moisture content is less than 15%.

According to another exemplary embodiment of the present invention, the method for manufacturing multi-use functional cotton may further include mixing at least one cotton selected from the group consisting of carbonized fiber cotton, carbon fiber cotton, waste cotton, synthetic fiber cotton, wastepaper cotton and straw cotton with the multi-use functional cotton at a weight ratio of 2:8 to 3:7.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is an image obtained by observing natural cotton under a microscope;
FIG. 2 is an image obtained by observing a lateral surface of natural cotton under a microscope;
FIG. 3 is a diagram showing a test report describing the test results of fire (flame) retardancy of multi-use functional cotton according to one exemplary embodiment of the present invention;
FIG. 4 is a diagram illustrating fire (flame) retardancy tests on natural cotton and multi-use functional cotton according to one exemplary embodiment of the present invention;
FIG. 5 is a diagram showing a test report describing the test results of tensile strength, cold resistance, and bursting strength of the multi-use functional cotton according to one exemplary embodiment of the present invention;
FIG. 6 is an image obtained by observing surfaces of the natural cotton and the multi-use functional cotton according to one exemplary embodiment of the present invention under a scanning electron microscope;
FIG. 7 is a diagram illustrating thermal insulation tests on the natural cotton and the multi-use functional cotton according to the present invention using a hot plate;
FIG. 8 is an image illustrating water repellency of the multi-use functional cotton according to the present invention;
FIG. 9 is a flowchart illustrating a method for manufacturing multi-use functional cotton according to the present invention;
FIG. 10 is a flowchart illustrating a method for preparing a composition for manufacturing multi-use functional cotton according to the present invention; and
FIG. 11 is a schematic block diagram showing an apparatus used to manufacture the multi-use functional cotton according to one exemplary embodiment of the present invention.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the scope of the invention.

Unless specifically stated otherwise, all the technical and scientific terms used in this specification have the same meanings as generally understood by a person skilled in the related art to which the present invention belongs. In general, the nomenclatures used in this specification and the experimental methods described below are widely known and generally used in the related art.

The present invention provides a composition for manufacturing multi-use functional cotton and a method for preparing the same. Here, the composition includes an ammonium aqueous solution, monoammonium phosphate (NH₄H₂PO₄), boron (B₂O₃), an anionic surfactant (ROSO₃NH₄, etc.), a fluorine-based water repellent (perfluoroacrylate, etc.), and an acrylic phosphate-based coupling agent (a coupling agent).

The composition for manufacturing multi-use functional cotton according to one exemplary embodiment of the present invention may include the monoammonium phosphate at a content of 20 to 25 parts by weight, the boron at a content of 3 to 7 parts by weight, the anionic surfactant at a content of 0.1 to 0.3 parts by weight, a copolymer of the fluorine-based water repellent at a content of 1.5 to 3.2 parts by weight, and the acrylic phosphate-based coupling agent at a content of 0.5 to 2.5 parts by weight, based on 100 parts by weight of the ammonium aqueous solution.

In the composition for manufacturing multi-use functional cotton, the monoammonium phosphate (NH₄H₂PO₄) is a phosphorus compound which easily binds to cellulose which is a main ingredient of the natural cotton, and participates in dehydration when the functional cotton is oxidized. Since molecules of the phosphorus compound are composed of chained polymers, the molecules permeate into lumens of cotton in a twisted ribbon shape, and are attached to the cotton. When the phosphorus compound comes in contact with a high-temperature medium such as a flame, a polymer of the phosphorus compound is decomposed, oxidized, and converted into a phosphorus compound participating in dehydration. Also, the phosphorus compound removes water from fibers to show fire (flame) retardancy, and has a cooling effect and an effect of inhibiting suffocation. Also, phosphorus oxide itself binds to water to form a polyindane, which is coated on cotton to cut off oxygen supply.

The boron (B₂O₃) has bactericidal, insecticidal and preservative effects, and also serves to prevent the cotton from igniting or extinguish a flame on the cotton.

ROSO₃NH₄ may be used as the anionic surfactant, and serves to facilitate permeation and dispersion of a solution into the natural cotton. Perfluoroacrylate may be used as the fluorine-based water repellent, and is added for moisture-proofing. Also, the fluorine-based water repellent shows high water repellency, a low release property and oil repellency, compared with the silicone water repellent. When the water repellent is present at a concentration of less than 10%, water repellency may be degraded, and a sufficient water repellent effect may be presented when water repellent is present at a concentration of 18%. The acrylic phosphate-based coupling agent may serve to facilitate cross-linking of a functional chemical to the natural cotton. The composition for manufacturing multi-use functional cotton may permeate into the natural cotton, and may be used to manufacture multi-use functional cotton.

The method for preparing a composition for manufacturing multi-use functional cotton according to the present invention may include (1) preparing a dissolving solution by adding monoammonium phosphate to an ammonium aqueous solution, (2) adding boron to the dissolving solution, (3) cooling the dissolving solution, and (4) injecting an anionic surfactant, a fluorine-based water repellent, and an acrylic phosphate-based coupling agent to the cooled dissolving solution. The method for preparing a composition for manufacturing multi-use functional cotton according to one exemplary embodiment of the present invention may further include adding the monoammonium phosphate to the ammonium aqueous solution and dissolving the monoammonium phosphate in the ammonium aqueous solution at a temperature of 50 to 70 °C for 2 to 3 minutes while stirring. Then, boron is injected to dissolve the monoammonium phosphate. The resulting dissolving solution is cooled for 1 to 2 hours, and an anionic surfactant, a fluorine-based water repellent, and an acrylic phosphate-based coupling agent are added to the cooled dissolving solution, and reacted for 10 to 30 minutes while stirring.

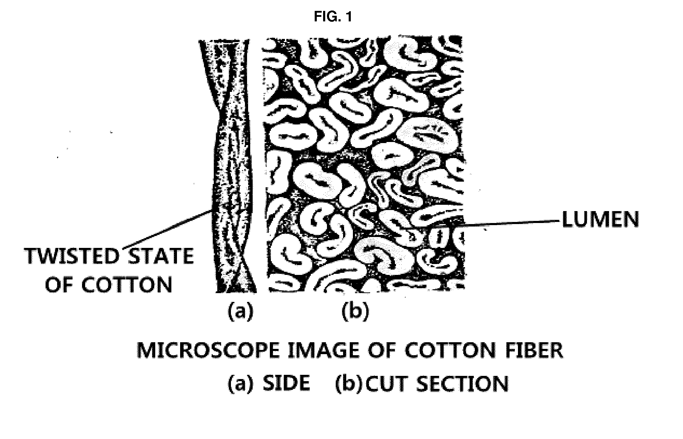

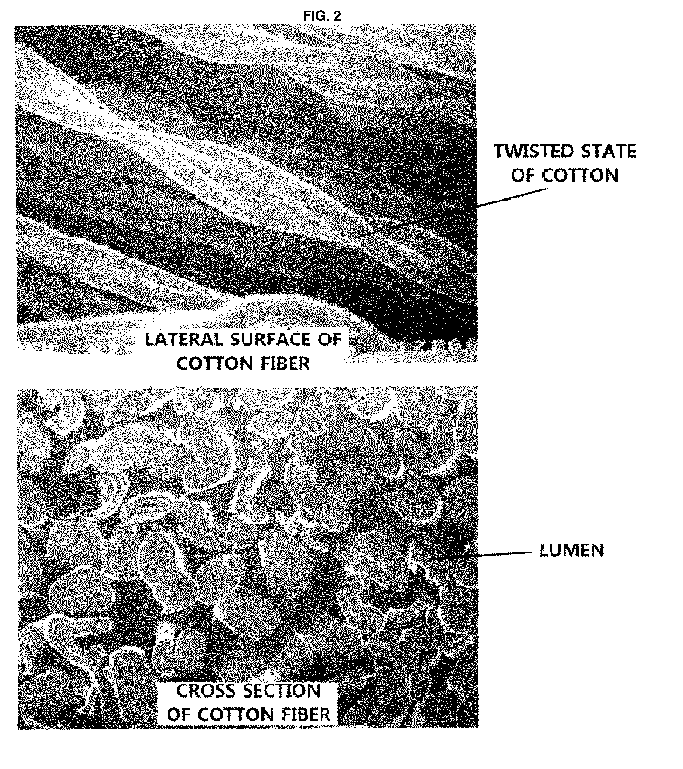

As shown in FIGS. 1 and 2, cotton fibers are present in a twisted ribbon shape, as viewed from the side, and have lumens, as viewed from a cross-sectional image. Therefore, the composition provided in the present invention may permeate into the lumens. Accordingly the composition provided in the present invention may be used in multi-use functional cotton as will be described below.

The present invention provides multi-use functional cotton manufactured by allowing the composition for manufacturing multi-use functional cotton to permeate into the natural cotton, and a method for manufacturing the same.

The multi-use functional cotton according to the present invention may be configured to include a composition for manufacturing multi-use functional cotton (hereinafter referred to as a "cotton composition"), which includes natural cotton, an ammonium aqueous solution, monoammonium phosphate, boron, an anionic surfactant, a fluorine-based water repellent, and an acrylic phosphate-based coupling agent.

Preferably, the natural cotton and the cotton composition may be present at a weight ratio of 5:1 to 5:3. That is, an amount of the permeated cotton composition may be in a range of 1 to 3 g per 5.0 g of the natural cotton. When the weight ratio is less than or equal to 5:1, functions of the multi-use functional cotton may not be exhibited. On the other hand, when the weight ratio is greater than or equal to 5:3, piece of cotton stick to each other due to the presence of a large amount of the cotton composition. As a result, the cotton may not be restored by a scutching process upon thickness restoration, and may be solidified and lose its original functions.

The method for manufacturing multi-use functional cotton according to the present invention may include (1) preparing cotton by immersing natural cotton in the cotton composition, (2) dehydrating and drying the cotton, and (3) scutching the cotton to restore a thickness of the cotton.

Operation (1) is characterized in that the natural cotton is immersed in the cotton composition for 1 to 2 minutes. Also, the natural cotton may be immersed in the cotton composition so that the natural cotton and the cotton composition are present at a weight ratio of 5:1 to 5:3. Specific description of the cotton composition used in operation (1) is omitted for clarity since the composition for manufacturing multi-use functional cotton has been described above in detail.

Operation (2) may include dehydrating the cotton using a mangle dehydrator. The cotton having the cotton composition absorbed therein needs to be dehydrated. Since dehydration using a centrifugal force is performed so that the cotton immersed in the cotton composition can be completely dehydrated, the cotton may not exhibit functionality. It is desirable to use a compressive dehydration method in which the cotton composition can remain at a predetermined amount in the cotton, and hence a dehydrating process may be performed by compressing the cotton through a mangle. Also, operation (2) may include drying the cotton using a dielectric-heat dryer. In this case, a tunnel length of the dielectric-heat dryer may be in a range of 10 to 15 m, and the drying of the cotton may be performed at a temperature of 150 to 230 °C and a speed of 1.5 to 3 m/min. The drying using the dielectric-heat dryer does not cause damage to the nature and shape of the functional chemical, and does not oxidize the cotton. Preferably, the cotton may be dehydrated using the mangle dehydrator until a moisture content reaches 70 to 80%, and the dehydrated cotton may then be dried using the dielectric-heat dryer until the moisture content is less than 15%.

Operation (3) is an operation of scutching the dried cotton to manufacture multi-use functional cotton. The multi-use functional cotton manufactured by immersing the natural cotton in the cotton composition and dehydrating and drying the natural cotton is not changed in width and length, but is changed in thickness. That is, since the multi-use functional cotton has a shrinkage rate of greater than 90%, the multi-use functional cotton should be scutched using a scutching machine so as to restore an initial thickness of the cotton by restoring the shrinkage rate. The multi-use functional cotton provided in the present invention is manufactured through such thickness restoration/scutching processes.

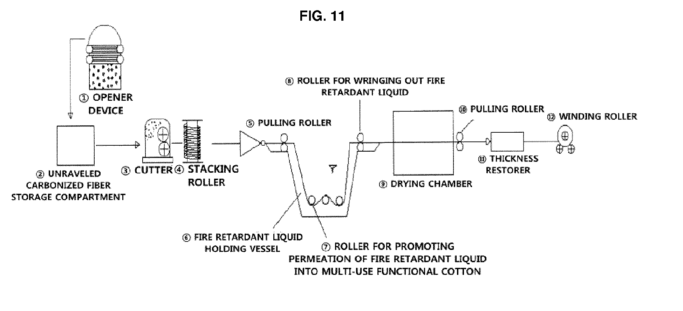

According to one exemplary embodiment of the present invention, the multi-use functional cotton may be manufactured using an opener device, an unraveled carbonized fiber storage compartment, a cutter, a stacking roller, a pulling roller, a fire retardant liquid (a composition for manufacturing multi-use functional cotton according to the present invention) holding vessel, a roller for promoting permeation of a fire retardant liquid into multi-use functional cotton, a drying chamber, a pulling roller, a thickness restorer, and a winding roller, as shown in FIG. 11.

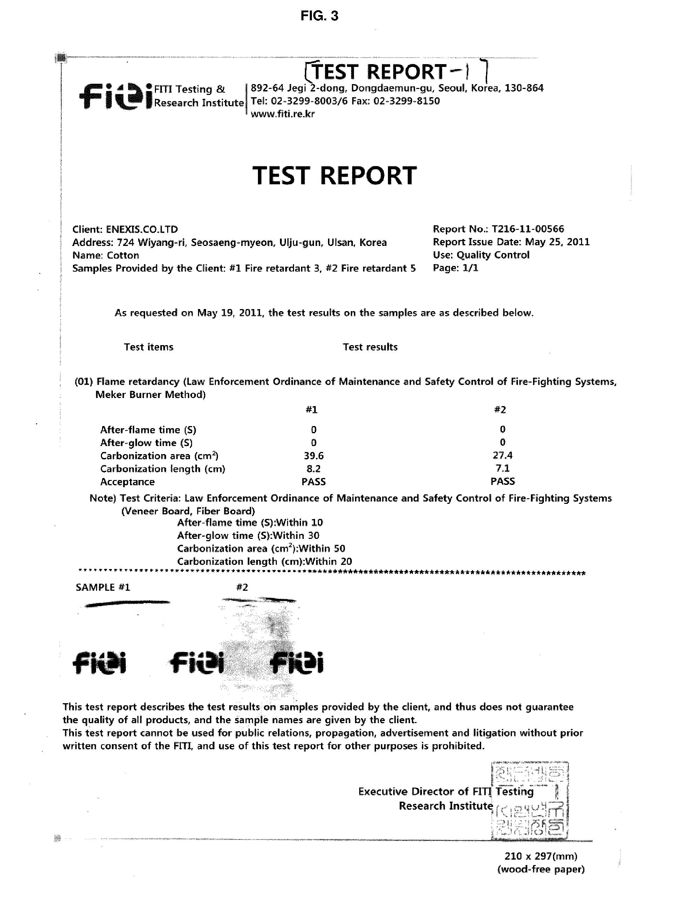

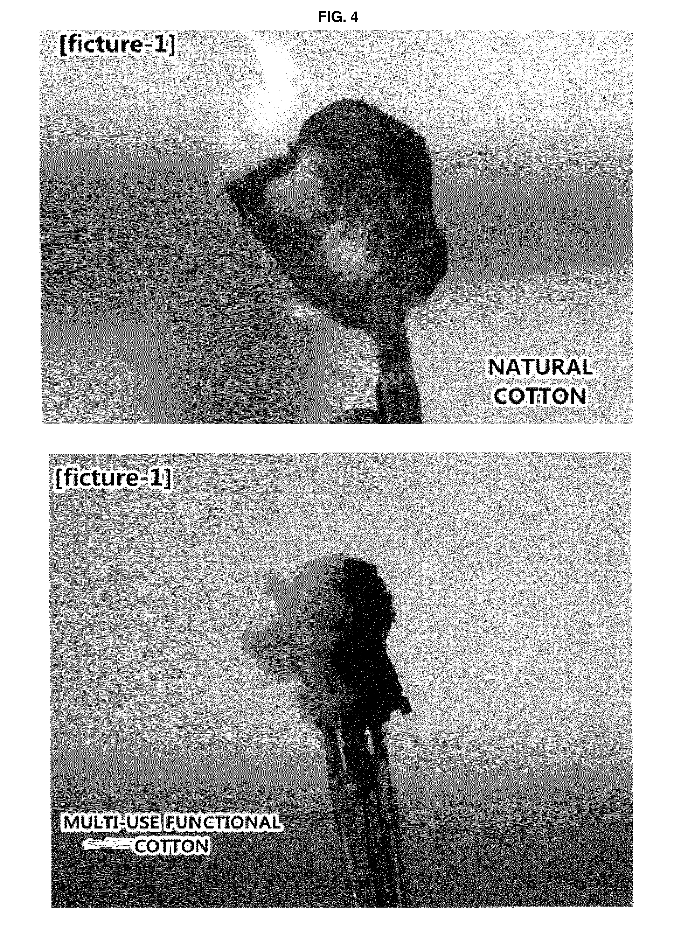

The multi-use functional cotton according to the present invention was tested using a Meker burner method, and determined to have passed (see FIG. 3). Also, the natural cotton (1.7 g) and the multi-use functional cotton (1.7 g) were subjected to a direct fire (flame) retardancy test for 30 seconds using a torch lamp. As a result, the natural cotton was completely burned within 30 seconds, maintaining no shape, while the multi-use functional cotton according to the present invention continued to bum for 30 seconds under the torch lamp, but was slightly carbonized with no flame. In this case, 2/3 of the multi-use functional cotton remained intact, which indicates that the multi-use functional cotton has very excellent fire (flame) retardancy (see FIG. 4).

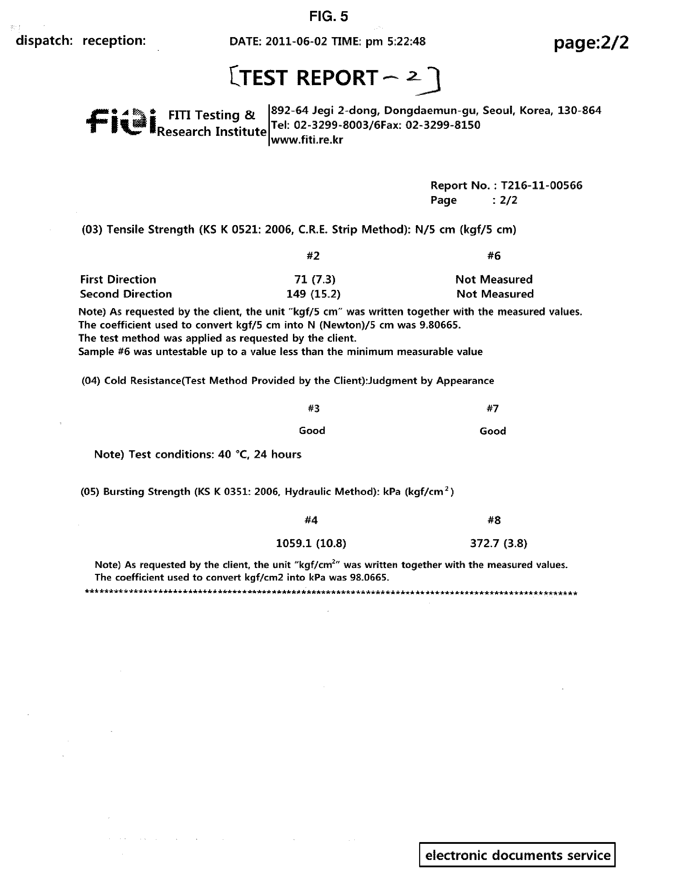

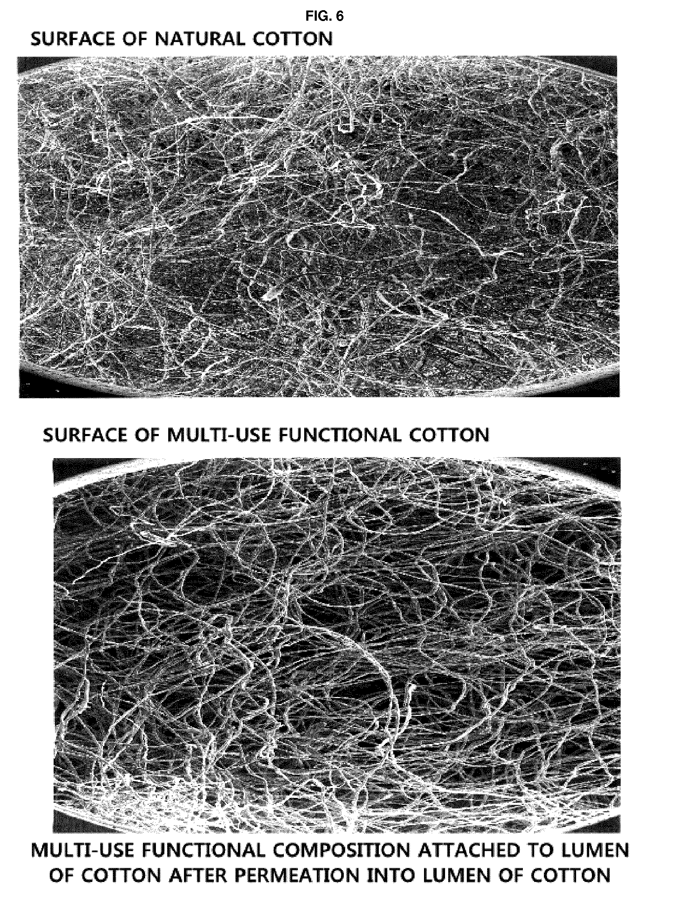

The tensile strength of the multi-use functional cotton according to the present invention was tested according to a C.R.E. strip method. The natural cotton was found to be untestable, but the multi-use functional cotton was measured to have a tensile strength of 149 (15.2) N/5 cm (kgf/5 cm), which indicates that the multi-use functional cotton shows very excellent tensile strength, compared to the glass fiber having a tensile strength of 3.43 N/5 cm (kgf/5 cm) (see FIG. 5). From the images taken under a scanning electron microscope for comparison, it could also be seen that the multi-use functional cotton included thick strands, and had very good elasticity and good cohesion, compared with the natural cotton (see FIG. 6).

The bursting strength of the multi-use functional cotton according to the present invention was tested according to a hydraulic method. As a result, there was a significant difference in bursting strength between the natural cotton (372.7 (3.8) kpa (kgf/cm²) and the multi-use functional cotton (1059.1 (10.8) kpa (kgf/cm²).

Also, it was revealed that both the natural cotton and the multi-use functional cotton have normal cold resistance when a cold resistance test (a test method designed by this applicant) was performed at -40 °C for 24 hours (see FIG. 5).

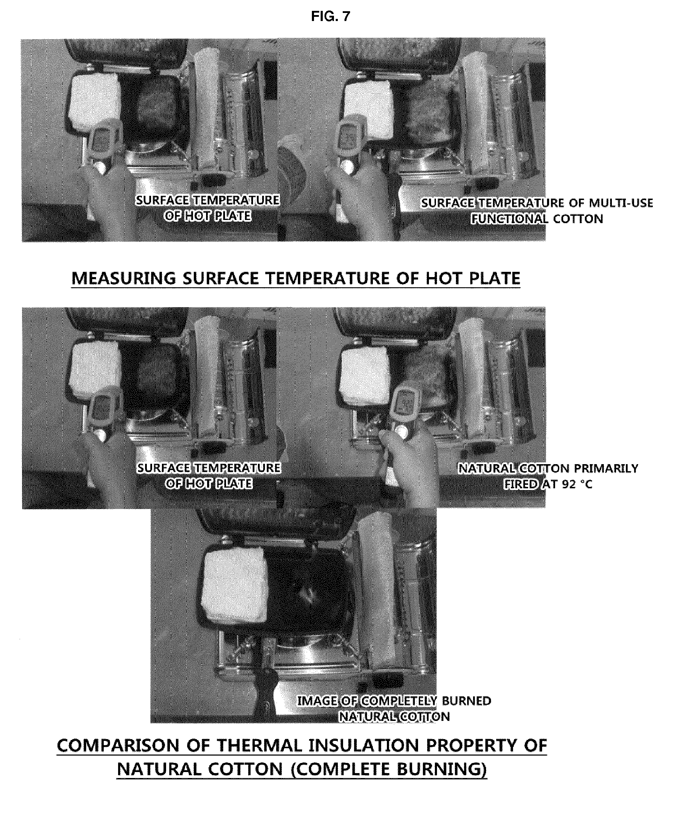

The natural cotton and the multi-use functional cotton according to the present invention were subjected to a thermal insulation test using a hot plate. As a result, it could be seen that the natural cotton is unusable as a thermal insulation material since the natural cotton was burned, maintaining no shape, while the multi-use functional cotton has very excellent properties as a thermal insulation material since the multi-use functional cotton did not bum (see FIG. 7).

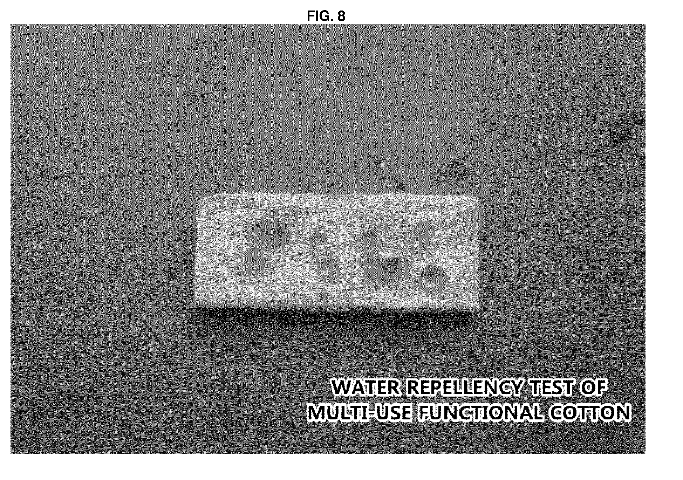

The water repellencies of the natural cotton and the multi-use functional cotton according to the present invention were compared. As a result, it could be seen that the natural cotton has no water repellency since water is absorbed into the natural cotton immediately after water comes in contact with the natural cotton, while the multi-use functional cotton shows excellent water repellency since water is not absorbed into the natural cotton at all (see FIG. 8).

As described above, since the multi-use functional cotton according to the present invention has excellent fire (flame) retardancy, tensile strength, bursting strength, thermal insulation property and water repellency, the multi-use functional cotton can be used as a material such as a processed cloth, a nonwoven cloth, a mat, a board, a valve, an elbow, a thermal retention-insulation material for pipes, or a filtering material. Also, the multi-use functional cotton according to the present invention can be used to prepare various other materials such as a fire (flame) retardant material, a thermal retention-insulation material, a cold resistant material, a sound absorbing material, an extremely low temperature material for LNG gas, an extremely low temperature material for LPG gas, mixed carbonized fiber cotton, and mixed carbon fiber cotton.

That is, the multi-use functional cotton according to the present invention can be provided with fire (flame) retardancy not by performing a fire (flame) retardancy process of coating a surface of the fibrous processed cloth but by allowing the composition for manufacturing multi-use functional cotton provided in the present invention to permeate into a tissue of fine natural cotton (which has an average thickness of approximately 20 µm), which is composed of long and fine fibrous strands and lumen in a twisted ribbon shape.

Also, the multi-use functional cotton according to the present invention can be used to prevent spreading of fire and cut off the fire upon ignition, be used as a thermal retention-insulation material and a sound absorbing material in the field of construction, and be used as a material for thermal retention-insulation materials of a high-temperature pipe or filter.

In addition, at least one cotton selected from the group consisting of carbonized fiber cotton (polyacrylonitile, PAN), carbon fiber cotton, waste cotton, synthetic fiber cotton, wastepaper cotton, and straw cotton, and the multi-use functional cotton according to the present invention may be put into an opener device (for unraveling cotton) at a weight ratio of 2:8 to 3:7, and mixed to prepare a cotton product.

Higher value-added mixed cotton obtained by providing the multi-use functional cotton with new functions can be manufactured as a material that is harmless to the human body and has excellent fire (flame) retardancy, thermal retention-insulation property, moisture resistance, cold resistance, an extremely low temperature property, and a sound absorbing property using the above-described method. Also, the multi-use functional mixed cotton can be useful in reducing the production cost through re-use of resources, and protecting the global environment through recycling of resources.

Hereinafter, preferred exemplary embodiments of the present invention will be described in order to aid in understanding the present invention. However, it should be understood that the description set forth herein is merely exemplary and illustrative of exemplary embodiments for the purpose of describing the present invention, but is not intended to limit the exemplary embodiments.

### Example 1: Manufacture of multi-use functional cotton

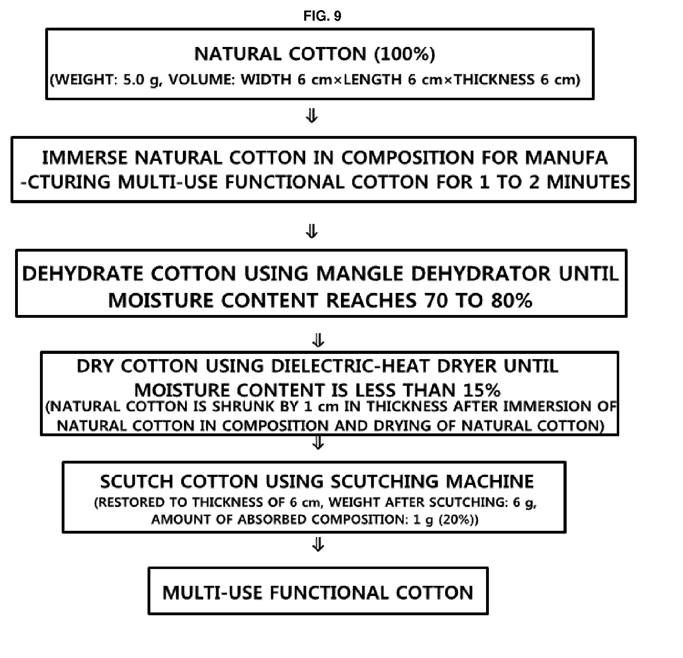

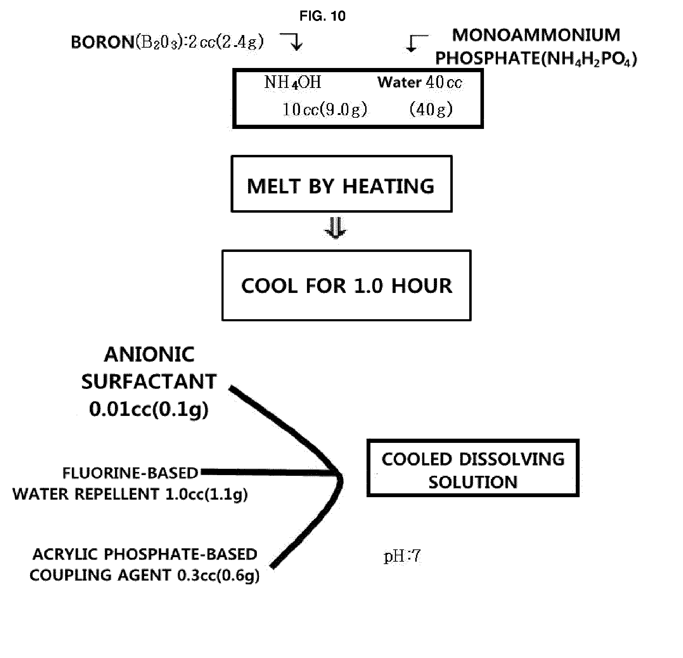

FIG. 9 is a diagram showing a method for manufacturing multi-use functional cotton according to one exemplary embodiment of the present invention, and FIG. 10 is a diagram showing a method for preparing a composition for manufacturing multi-use functional cotton according to the present invention. 5 g (a volume of 250 cc measured after compression) of natural cotton having a size of 60 mm×60 mm×60 mm (width×length×thickness) as shown in FIG. 9 was immersed in 53.6 g (50 cc) of the composition for manufacturing multi-use functional cotton prepared by the method as shown in FIG. 9 for 1 to 2 minutes so that the composition was sufficiently absorbed into the natural cotton. The cotton into which the composition was absorbed was dehydrated using a mangle dehydrator until a moisture content reached approximately 70 to 80% (an amount of an injected chemical was 14.9 g). Thereafter, the dehydrated cotton was dried using a dielectric-heat dryer until the moisture content was less than 15%. In this case, a tunnel length of the dielectric-heat dryer was in a range of 10 to 15 m, and the drying of the cotton was performed at a temperature of 150 to 230 °C and a speed of 1.5 to 3 m/min. The dried cotton was scutched to restore a thickness of the cotton, and multi-use functional cotton was then manufactured.

The natural cotton was not changed in width and length while undergoing the processes of immersing natural cotton in the cotton composition and dehydrating and drying the natural cotton, but was significantly shrunk in thickness from 60 mm to 10 mm with a shrinkage rate of 91.7%. The cotton was scutched using a thickness restorer so as to restore the shrinkage rate, and the thickness of the cotton returned to an initial thickness (60 mm).

A pH value of the composition was 7, the weight of the scutched cotton was 6.0 g, and 1 g of the composition for manufacturing multi-use functional cotton was immersed into 5 g of the natural cotton so that the weight ratio of the composition for manufacturing multi-use functional cotton was set to 20%, based on the total weight of the natural cotton.

### Example 2: Test of fire (flame) retardancy of multi-use functional cotton

The fire (flame) retardancy of the multi-use functional cotton was tested using a Meker burner method according to the test criteria specified in the Law Enforcement Ordinance of Maintenance and Safety Control of Fire-Fighting Systems Act. The results are listed in the following Table 1.

**Table 1**

| Items | Measured values | Test criteria |
|---|---|---|
| After-flame time (S) | 0 | Within 10 |
| After-glow time (S) | 0 | Within 30 |
| Carbonization area (cm²) | 27.4 | Within 50 |
| Carbonization length (cm) | 7.1 | Within 20 |
| Acceptance | Pass | |

As listed in Table 1, the multi-use functional cotton manufactured in the present invention passed the fire retardancy test since the multi-use functional cotton had an after-flame time of 0 seconds and an after-glow time of 0 seconds, which were much lower than reference values in the test, that is, an after-flame time of 10 seconds and an after-glow time of 30 seconds, a carbonization area of 27.4 cm², which was better than a reference value 50 cm², and a carbonization length of 7.1 cm, which was much better than a reference value of 20 cm.

Also, from the direct fire (flame) retardancy test results using a torch lamp, the flammable natural cotton was completely burned within 30 seconds, maintaining no shape, while the multi-use functional cotton was continuously burned for 30 seconds using a torch lamp, but was slightly carbonized with no flame, and 2/3 of the multi-use functional cotton remained intact, as shown in FIG. 4.

### Example 3: Comparison of tensile strength between natural cotton and multi-use functional cotton

The tensile strengths of the natural cotton and the multi-use functional cotton were compared using a C.R.E. strip method. As listed in Table 2, the tensile strength of the natural cotton was untestable up to the minimum measurable value, while the multi-use functional cotton had a very high tensile strength, which was measured to be 149 (15.2) N/5 cm (kgf/5 cm). Upon comparison with the tensile strength of the glass fiber (3.43 N/5 cm (kgf/5 cm), it could be seen that the multi-use functional cotton showed very excellent tensile strength.

**Table 2**

| Item | Natural cotton | Multi-use functional cotton | Glass fiber |
|---|---|---|---|
| Measured value | Untestable | 149 (15.2) N/5 cm (kgf/5 cm) | 3.43 N/5 cm (kgf/5 cm) |

### Example 4: Comparison of bursting strength between natural cotton and multi-use functional cotton

The bursting strengths of the natural cotton and the multi-use functional cotton were compared using a hydraulic method. As listed in Table 3, it could be seen that the natural cotton had a bursting strength of 372.7 (3.8) kpa (kgf/cm²), while the multi-use functional cotton had a significantly high bursting strength of 1059.1 (10.8) kpa (kgf/cm²).

**Table 3**

| Item | Natural cotton | Multi-use functional cotton |
|---|---|---|
| Measured value | 372.7 (3.8) kpa (kgf/cm²) | 1,059.1 (10.8) kpa (kgf/cm²) |

### Example 5: Comparison of thermal insulation property between natural cotton and multi-use functional cotton

To compare the thermal insulation properties of the natural cotton and the multi-use functional cotton, a thermal insulation test using a hot plate was performed on the natural cotton and the multi-use functional cotton. The natural cotton having a thickness of 3 cm was fired at 92 °C (initial ignition) on a hot plate having a surface temperature of 360 °C, and completely burned, which made it impossible to measure the natural cotton for fire retardancy. Accordingly, the natural cotton was unusable as a thermal insulation material. On the other hand, it was confirmed that the multi-use functional cotton having a thickness of 3 cm had a surface insulation temperature of 39 °C, as measured on a hot plate having a surface temperature of 360 °C, and thus was very useful as a thermal insulation material since a difference in surface temperature between the hot plate and the multi-use functional cotton was 321 °C, and the multi-use functional cotton was not set on fire (see FIG. 7).

### Example 6: Comparison of water repellency between natural cotton and multi-use functional cotton

A test for comparison of water repellency between the natural cotton and the multi-use functional cotton was performed. As a result, it could be seen that the natural cotton had no water repellency since water was absorbed into the natural cotton immediately after coming in contact with the natural cotton, but the multi-use functional cotton showed excellent water repellency since drops of water formed on a surface of the multi-use functional cotton, and water was not absorbed into the natural cotton at all, as shown in FIG. 8.

The multi-use functional cotton according to the present invention can be useful in maintaining a thermal retention property, a thermal insulation property and cold resistance of the natural cotton as a functional chemical that is harmless to the human body is allowed to permeate into a hollow tissue (lumen) of the natural cotton, and improving elasticity, tensile strength and bursting strength since more closed cells are formed than in natural cotton not treated with the functional chemical. Also, the multi-use functional cotton according to the present invention can be useful in preventing oxidation of the cotton and exhibiting fire (flame) retardancy, moisture resistance, and spinnability. In addition, the multi-use functional cotton of the present invention has a low production cost and can exhibit environmentally friendly characteristics, and a used waste material can be re-used later as a recycled material.

### Industrial applicability

The multi-use functional cotton according to the present invention can be expected to be applied in various industrial fields, including as a material in a fibrous structure such as a processed cloth, a nonwoven cloth, a mat, synthetic fiber cotton, mixed wastepaper cotton, mixed recycled cotton, mixed straw cotton, and mixed carbonized (carbon) fiber cotton.

It will be apparent to those skilled in the art that various modifications can be made to the above-described exemplary embodiments of the present invention without departing from the scope of the invention. Thus, it is intended that the present invention covers all such modifications provided they come within the scope of the appended claims and their equivalents.

## Claims

1. A composition for manufacturing multi-use functional cotton, comprising an ammonium aqueous solution, monoammonium phosphate, boron, an anionic surfactant, a fluorine-based water repellent, and an acrylic phosphate-based coupling agent.

2. The composition of claim 1, wherein the monoammonium phosphate is comprised at a content of 20 to 25 parts by weight, based on 100 parts by weight of the ammonium aqueous solution.

3. The composition of claim 1, wherein the boron is comprised at a content of 3 to 7 parts by weight, based on 100 parts by weight of the ammonium aqueous solution.

4. The composition of claim 1, wherein the anionic surfactant is comprised at a content of 0.1 to 0.3 parts by weight, based on 100 parts by weight of the ammonium aqueous solution.

5. The composition of claim 1, wherein the fluorine-based water repellent is comprised at a content of 1.5 to 3.2 parts by weight, based on 100 parts by weight of the ammonium aqueous solution.

6. The composition of claim 1, wherein the acrylic phosphate-based coupling agent repellent is comprised at a content of 0.5 to 2.5 parts by weight, based on 100 parts by weight of the ammonium aqueous solution.

7. The composition of claim 1, wherein the composition for manufacturing multi-use functional cotton permeates into the natural cotton, and is used to manufacture the multi-use functional cotton.

8. A method for preparing a composition for manufacturing multi-use functional cotton, comprising:
(1) preparing a dissolving solution by adding monoammonium phosphate to an ammonium aqueous solution;
(2) adding boron to the dissolving solution;
(3) cooling the dissolving solution; and
(4) injecting an anionic surfactant, a fluorine-based water repellent, and an acrylic phosphate-based coupling agent into the cooled dissolving solution.

9. The method of claim 8, wherein operation (1) further comprises dissolving the monoammonium phosphate in the ammonium aqueous solution at a temperature of 50 to 70 °C for 2 to 3 minutes while stirring.

10. The method of claim 8, wherein operation (3) is performed by cooling the dissolving solution for 1 to 2 hours.

11. Multi-use functional cotton comprising the natural cotton and the composition defined in any one of claims 1 to 7.

12. The multi-use functional cotton of claim 11, wherein the natural cotton and the composition are present at a weight ratio of 5:1 to 5:3.

13. The multi-use functional cotton of claim 11, wherein the multi-use functional cotton is used to prepare a processed cloth, a nonwoven cloth, a mat, a board, a valve, an elbow, a thermal retention-insulation material for pipes, or a filtering material.

14. The multi-use functional cotton of claim 11, wherein the multi-use functional cotton is used to prepare a fire retardant material, a flame retardant material, a thermal retention-insulation material, a cold resistant material, a sound absorbing material, an extremely low temperature material for LNG gas, an extremely low temperature material for LPG gas, mixed carbonized fiber cotton, or mixed carbon fiber cotton.

15. A method for manufacturing multi-use functional cotton, comprising:
(1) preparing cotton by immersing natural cotton in the composition defined in any one of claims 1 to 7;
(2) dehydrating and drying the cotton; and
(3) scutching the cotton.

16. The method of claim 15, wherein operation (1) is performed by immersing the natural cotton in the composition for 1 to 2 minutes.

17. The method of claim 15, wherein the natural cotton is immersed in the composition in operation (1) so that the natural cotton and the composition are present at a weight ratio of 5:1 to 5:3.

18. The method of claim 15, wherein operation (2) comprises:
dehydrating the cotton using a mangle dehydrator.

19. The method of claim 15, wherein operation (2) comprises:
drying the cotton using a dielectric-heat dryer.

20. The method of claim 15, wherein operation (2) comprises:
dehydrating the cotton using the mangle dehydrator until a moisture content reaches 70 to 80%; and
drying the dehydrated cotton using the dielectric-heat dryer until the moisture content is less than 15%.

21. The method of claim 15, further comprising:
mixing at least one cotton selected from the group consisting of carbonized fiber cotton, carbon fiber cotton, waste cotton, synthetic fiber cotton, wastepaper cotton, and straw cotton with the multi-use functional cotton at a weight ratio of 2:8 to 3:7.
